# EUROPÄISCHE PATENTSCHRIFT

(11) **EP 3 383 559 B1**
(45) Veröffentlichungstag und Bekanntmachung des Hinweises auf die Patenterteilung: **21.10.2020**
(21) Anmeldenummer: 16812916.1
(22) Anmeldetag: 02.12.2016
(51) Int. Cl.: B09C 1/00, B09C 1/08, B09C 1/10, C02F 1/72, C02F 3/00, C02F 101/16, C02F 103/06

(54) **VERFAHREN UND ANLAGE ZUR IN-SITU-SANIERUNG VERUNREINIGTER BÖDEN**
METHOD AND INSTALLATION FOR THE IN SITU SANITATION OF CONTAMINATED SOILS
PROCÉDÉ ET INSTALLATION POUR L'ASSAINISSEMENT IN SITU DE SOLS POLLUÉS

(30) Priorität: 03.12.2015 DE 102015121042; 21.06.2016 US 201615188269
(43) Veröffentlichungstag der Anmeldung: 10.10.2018
(73) Patentinhaber: Geo-Bohrtechnik GmbH, 89134 Blaustein/Bermaringen (DE)
(72) Erfinder: KLOCK, Benjamin, 89075 Ulm (DE)
(74) Vertreter: Raunecker, Klaus Peter
(86) Internationale Anmeldenummer: PCT/EP2016/079673
(87) Internationale Veröffentlichungsnummer: WO 2017/093537

(56) Entgegenhaltungen:
- EP-A2- 1 361 002
- DE-C1- 3 811 714
- DE-U1-202010 005 812
- US-A- 5 879 107
- US-A- 5 986 159

## Beschreibung

Die Erfindung betrifft eine Anlage zur in-situ Sanierung eines Bodens und/oder Wassers/Grundwassers mit einem kontaminierten Bodenbereich nach dem Oberbegriff des Anspruchs 1, wie sie beispielsweise aus der DE 20 2010 005 812 U1 bekannt ist.

Die Sanierung von kontaminiertem Boden und/oder Grundwasser stellt eine wichtige Aufgabe dar, zu deren Lösung eine Vielzahl technischer Verfahren erarbeitet wurde. Da die zu sanierenden Gebiete oftmals überbaut sind, kommen den sogenannten in-situ Verfahren eine besondere Bedeutung zu, da sie eine Sanierung des kontaminierten Bodens und/oder Wassers vor Ort gestatten, ohne dass eine Auskofferung des betroffenen Bodenbereichs durchgeführt werden muss.

Ein besonders wirksames Verfahren zur in-situ Sanierung von Böden, die durch organische Schadstoffe verunreinigt sind, ist die sogenannte in-situ chemische Oxidation (ISCO). Das Funktionsprinzip der in-situ chemischen Oxidation beruht darauf, geeignete chemische Oxidationsmittel in den Boden einzubringen und zu verteilen. Damit lassen sich insbesondere Mineralölkohlenwasserstoffe, aliphatische Kohlenwasserstoffe, leichtflüchtige chlorierte/halogenierte Kohlenwasserstoffe oder auch polyzyklische aromatische Kohlenwasserstoffe im Boden abbauen. Aufgrund chemischer Reaktionen des Oxidationsmittels im Boden wird Sauerstoff freigesetzt, wodurch Abbauprozesse gefördert und beschleunigt werden sollen, um die vorhandenen Schadstoffe in-situ zu eliminieren. Das Verfahren ist beispielsweise in der Veröffentlichung "In-situ chemische Oxidation: Erfahrungen aus der Herdsanierung" (Handbuch zur Altlastensanierung, C.F.Müller Verlag, 3. Auflage Februar 2011) erläutert. Weiterhin ist die Nutzung der ISCO zur in-situ Sanierung von Böden in der gattungsbildenden DE 20 2010 005 812 U1 oder in Dokument DE 38 11 714 C1 beschrieben.

Die in-situ chemische Oxidation eignet sich insbesondere zur Herdsanierung bei mittlerer bis hoher Konzentration von Schadstoffen. Ein besonderer Vorteil der in-situ chemischen Oxidation gegenüber alternativen bekannten Verfahren besteht in einer verkürzten Sanierungsdauer. Das Oxidationsmittel mittels hydrostatischen Drucks in die Sanierungsbereiche eingebracht und dort beispielsweise - wie in der DE 20 2010 005 812 U1 beschrieben - mit Hilfe von Injektionslanzen in den zu behandelnden Bodenbereich injiziert.

Obwohl das Verfahren prinzipiell gut zur Bodensanierung geeignet ist, hat sich in der Praxis herausgestellt, dass die Bodensanierung mit Hilfe von in-situ chemischer Oxidation unter Verwendung herkömmlicher Injektionslanzen nicht die gewünschten Erfolge bringt. Das liegt daran, dass beim Injizieren des Oxidationsmittels unter Verwendung herkömmlicher Injektionslanzen die Reagenzien oft nicht gut genug in den zu behandelnden Boden eindringen, so dass Reaktionspartner häufig nicht in reaktiven Kontakt kommen und als Konsequenz daraus oft keine hinreichende Dekontamination erreicht wird. Der chemische Abbau der Schadstoffe erfolgt mit einer Reaktion zweiter Ordnung. Dies bedeutet, dass bei niedriger Konzentration des Oxidationsmittels oder der Schadstoffe auch die Abbaugeschwindigkeit stark abnimmt. Aufgrund inhomogener Bodeneigenschaften, heterogener Schadstoffverteilung und der oftmals schwer vorhersagbaren Schadstoffeigenschaften wäre in vielen Anwendungsfällen ein erhöhter Wirkradius der Oxidationsmittel notwendig, der mit der herkömmlichen Injektionstechnik nicht erreicht werden kann. Insbesondere wurde festgestellt, dass beim Vorliegen von Bodenschichten mit geringer hydraulischer Durchlässigkeit und/oder Felsformationen keine zufriedenstellende Dekontamination erzielt werden kann, da solche gering durchlässigen Böden in Folge einer sehr geringen Fließgeschwindigkeit des Grundwassers nicht erfolgreich sanierbar sind bzw. sehr lange Sanierungszeiten erfordern.

Die Aufgabe der Erfindung besteht daher darin, die bekannten Anlagen zur Bodensanierung in einer solchen Weise weiterzuentwickeln, dass der Dekontaminationsgrad erhöht und auch bei schwierigen Bodenverhältnissen eine wirtschaftlich erfolgreiche Bodensanierung erreicht werden kann.

Diese Aufgabe wird durch eine Anlage mit den Merkmalen der unabhängigen Ansprüche gelöst. Vorteilhafte Ausgestaltungen sind Gegenstand der Unteransprüche.

Erfindungsgemäß wird eine fluide Substanz unter Verwendung eines Druckinjektionsverfahrens und druckgesteuert in den Boden injiziert. Hierzu wird eine druckgesteuerte Injektionsvorrichtung verwendet. Da die fluide Substanz stoßartig unter erhöhtem Druck eingebracht wird, werden die zu behandelnden Böden im Vergleich zum Stand der Technik wesentlich schneller von der fluiden Substanz erreicht und kommen in Kontakt mit der fluiden Substanz, so dass langwierige "pump and treat" - Maßnahmen entfallen können. Der erhöhte Druck ist vorteilhaft für eine wirtschaftlich effiziente Ausführung der Bodensanierung, da die fluide Substanz bei einem minimalen Mengeneinsatz über einen großen Sanierungsbereich verteilt werden kann. Somit ermöglicht der Einsatz des erfindungsgemäßen Verfahrens erhebliche Zeit- und Kostenreduktionen. Weiterhin ermöglicht das Verfahren aufgrund der druckgesteuerten Injektion, dass auch in schlecht durchlässigen Böden eine Durchdringung mit der fluiden Substanz erreicht wird. Der Arbeitsdruck variiert in Abhängigkeit der Bodendurchlässigkeit und Schadstoffverteilung zwischen 2 und 100bar, insbesondere zwischen 2 und 30 bar. Je nach Anwendungsfall kann eine einfache oder mehrfache Verpressung stattfinden, um das Oxidationsmittel möglichst tief beziehungsweise homogen in den zu behandelnden Boden einzupressen.

Die Technik der Druckinjektion ist ein gängiges Verfahren aus dem Spezialtiefbau und wird dort zur Bodenhärtung verwendet. Das Verfahren ist beispielsweise beschrieben im "Handbuch des Spezialtiefbaus: Geräte und Verfahren", Herausgeber Rolf Katzenbach, Bundesanzeiger. Im Spezialtiefbau wird dabei ein fließfähiger Füllstoff (typischerweise ein mit Wasser gemischter Zement oder ein Kunstharz) verwendet, der in Hohlräume und Poren des Baugrunds eingepresst wird und dort - je nach der zu lösenden Bauaufgabe - erhärtet oder erstarrt. Der Kern der Erfindung besteht somit darin, ein Verfahren, das im Spezialtiefbau zur Stabilisierung des Bauuntergrundes verwendet wird, in einer solchen Weise zu adaptieren, dass es zur Bodensanierung mit Hilfe einer fluiden Substanz, verwendet werden kann.

Die fluide Substanz kann insbesondere im Zuge einer Altlastensanierung ein Oxidationsmittel für eine in-situ chemische Oxidation sein.

Bei der in-situ chemischen Oxidation (ISCO) werden die Schadstoffe im Untergrund durch Infiltration eines Oxidationsmittels auf chemischem Wege durch Oxidation abgebaut. Mit Hilfe geeigneter Oxidationsmittel, welche verschiedenste Zusammensetzungen und Aggregatzustände aufweisen können, können unterschiedliche organische Schadstoffe durch die chemische Oxidation aus Boden, Grundwasser oder Abwasser beseitigt werden. Die zum Einsatz kommenden Oxidationsmittel können insbesondere Gemische aus mehreren Komponenten sein. Zweckmäßigerweise werden diese Komponenten unmittelbar vor Ort gemischt, um das Oxidationsmittel zu erhalten. Im Vergleich zum biologischen Abbau verläuft die Reaktion der chemischen Oxidation sehr schnell. Als Oxidationsmittel kommen Kalium- oder Natriumpermanganat, das sogenannte Fentons Reagenz, Wasserstoffperoxid oder Ozon zum Einsatz. Ein wichtiges Kriterium für die Anwendbarkeit eines bestimmten Oxidationsmittels ist dabei die Langlebigkeit: schnell zerfallende Oxidationsmittel haben zwar oft eine höhere Reaktionsfähigkeit, diese hält aber nur für eine geringe Zeit an, so dass für einen guten Reinigungserfolg sicher gestellt werden muss, dass das Oxidationsmittel schnell in den zu behandelnden Bodenbereich gelangt.

Ein gängiges relativ langlebiges Oxidationsmittel ist Permanganat, insbesondere Kaliumpermanganat in wässriger Lösung; es wird herkömmlicherweise zum diffusiven Eindringen in schlechter durchströmbare Bodenbereiche verwendet. Allerdings ist die Dauer der Wirkstoffapplikation typischerweise gering im Vergleich zum Alter des Schadens. Die Schadstoffe sind daher sehr viel weiter in die geringer durchlässigen Bereiche eingedrungen, als die Oxidationsmittel dies in der Zeit ihrer Wirksamkeit vermögen und entziehen sich der Behandlung durch das Oxidationsmittel. Die erfindungsgemäße druckgesteuerte Injektion von Oxidationsmittel bringt hier große Vorteile, weil bei diesem Verfahren flüssige bzw. auch ein höher viskoses Oxidationsmittel stoßartig sowie auch exakt tiefenhorizontiert in den Boden eingepresst werden kann. Dadurch können auch weiter entfernt liegende sowie geringer durchlässige Bodenschichten in Sanierungsbereichen erreicht werden. Haben sich zu sanierende Schadstoffe in geringer durchlässigen Zwischenschichten angereichert, so können sie auch hier mit der erfindungsgemäßen Druckinjektion exakt tiefenhorizontiert mit dem Oxidationsmittel behandelt werden, da die betreffende Ventilposition dementsprechend im zu sanierenden Untergrund festgelegt werden kann. Aufgrund der vergleichsweise langen Lebenszeit von Permanganat können die Bestandteile des Oxidationsmittels bereits vermischt werden, bevor das Oxidationsmittel in die Injektionsvorrichtung eingeleitet wird; vorteilhafterweise ist die hierbei zum Einsatz kommende Mischvorrichtung jedoch in der unmittelbaren Umgebung der Injektionsvorrichtung angeordnet, um lange Transportwege des Oxidationsmittels zu vermeiden.

Ein weiteres bekanntes Oxidationsmittel ist das bereits erwähnte "Fentons Reagenz", ein Gemisch aus Wasserstoffperoxid H₂O₂ mit Eisen(II)-Salz (FeSO₄), welches in saurer Lösung (z.B. H₂SO₄) Hydroxyl-Radikale bildet. Da Fentons Reagenz schnell zerfällt, kann dieses Oxidationsmittel herkömmlicherweise nur in Böden mit guter Durchlässigkeit angewendet werden; in Böden, in denen ausgedehnte Inhomogenitäten mit vielen Bereichen geringerer Durchlässigkeit vorliegen, könnte das Reagenz in den adressierten kontaminierten Bereichen nicht wirken, da es vor dem Eindringen in diese Bereiche bereits zerfallen wäre. Mit Hilfe der erfindungsgemäßen druckgesteuerten Injektion kann jedoch ein kurzlebiges Oxidationsmittel wie Fentons Reagenz auch in Böden mit geringerer Durchlässigkeit erfolgreich eingesetzt werden, weil es mit erhöhtem Druck eingepresst wird und daher schnell in die zu behandelnden Bodenbereiche gelangt. Aufgrund der kurzen Zerfallzeit ist es in diesem Fall vorteilhaft, die Komponenten separat in den Innenraum der Injektionsvorrichtung einzuführen und erst unmittelbar vor dem Einpressvorgang zu mischen.

Eine Alternative zur Bodensanierung mit Hilfe der in-situ chemischen Oxidation durch verschiedene Oxidationsmitteln ist die Verwendung einer fluiden Substanz, welche ein Nährmedium für Mikroorganismen darstellt. Es ist allgemein bekannt, dass Mikroorganismen nahezu alle Substanzen verstoffwechseln können. Wird ein Nährmedium für Mikroorganismen, wie beispielsweise Melasse aus Zuckerrohr, Zuckerrüben und/oder Zuckerhirse, in den zu sanierenden Boden injiziert, so kann die Bildung von Mikroorganismen angeregt werden, welche wiederum in der Lage sind die dort befindlichen Schadstoffe zu verstoffwechseln und den Dekontaminationsgrad wesentlich verringern.

Zur Durchführung des oben beschriebenen Verfahrens kann eine Anlage mit einem Ventilrohr mit einem druckgesteuerten Auslassventil und einer in den Boden einbringbaren Injektionsvorrichtung verwendet werden, mit welcher die fluide Substanz unter erhöhtem Druck in den Boden injiziert werden kann. Insbesondere kann die Anlage eine Mischvorrichtung zur Herstellung der fluiden Substanz, insbesondere des Oxidationsmittels aus mehreren Komponenten, umfassen.

Vorteilhafterweise wird die fluide Substanz mit Hilfe eines als Manschettenrohr ausgestalteten Ventilrohrs in den Boden injiziert. Manschettenrohre sind aus dem Spezialtiefbau bekannte Injektionsvorrichtungen und werden dort dazu verwendet, um eine Festigkeitserhöhung des Baugrunds zu erreichen und auf diese Weise die Tragfähigkeit des Untergrundes zu erhöhen bzw. seine Verformbarkeit zu reduzieren. Manschettenrohre sind Rohre aus Kunststoff oder Stahl, die in einem vorgegebenen Abstand mit Öffnungen versehen ist. Die Öffnungen sind mit einer Manschette, welche je nach Anwendungsfall aus einem entsprechend ausgewähltem Material, wie beispielsweise einem Gummi oder einem Kunststoff gebildet sein kann, überdeckt, die sich unter dem Injektionsdruck ventilartig aufweitet und das Injektionsmedium durch die Öffnungen in die Umgebung austreten lässt. Mit Hilfe eines solchen Manschettenrohrs lässt sich - je nach Ausgestaltung der Gummimanschette - das Oxidationsmittel mit Injektionsdrücken von bis zu 15 bis 80 bar druckgesteuert in den Boden injizieren. Im Innenraum des Manschettenrohrs sind gesteuert aktivierbare Dichtungsringe, sogenannten Doppelpacker, vorgesehen, die sicherstellen, dass die fluide Substanz bei Druckausübung in den gewünschten Bodenbereich eingepresst wird. Auf diese Weise kann auch in hydraulisch gering durchlässigem Untergrund eine sehr hohe horizontale Eindringung der fluiden Substanz in den zu sanierenden Boden bzw. das zu sanierende Grundwasser über die jeweilige Injektionsbohrung erreicht werden.

Weiterhin ist die Außenwand des Ventilrohrs im Bereich des Auslassventils mit radial abragenden Kragen, sogenannten Horizontalsperren, versehen. Diese Horizontalsperren stellen sicher, dass die druckgesteuert eingepresste fluide Substanz horizontal und teufenorientiert in die kontaminierten Bodenschichten injiziert wird. Die Horizontalsperren verhindern hydraulische Kurzschlüsse und ermöglichen es somit, die fluide Substanz mit höherem Arbeitsdruck einzubringen.

Die Horizontalsperren können dabei jeweils aus einem einzuzementierenden, extrem druckstabilen Hart-PVC-Ring bestehen, die in einer härtbaren, das Ventilrohr umgebenden Mantelmischung aus z.B. Wasser, Zement und Bentonit angeordnet sind. Nach dem Erhärten der Mantelmischung bildet diese eine Hülle um das Manschettenrohr, die es unter anderem auch in seiner Lage fixiert. Durch das Einbringen der Horizontalsperren kann eine Druckstabilität des Zementationssystems in den Vertikalrichtungen insbesondere dadurch gewährleistet werden, dass eine robusten Materialstärke des Hart-PVC-Rings in einem Bereich von etwa 10mm-30mm, insbesondere von etwa 19mm gewählt wird.

Der Innenring der Horizontalsperre mit üblicherweise einem freien Durchmesser von ca. 50 mm kann als radial umschließende Passung für die Rohraußenseite gefertigt sein und mit der Rohraußenseite rundum dicht verklebt werden.

Der Ringaußendurchmesser wird in Anpassung an das jeweilige Bohrungskaliber festgelegt; er kann insbesondere in einem Bereich von 100mm-150mm, insbesondere in einem Bereich von 110mm liegen. Die Ringaußenseite kann oben und unten an der Außenkante mit einer Fase beziehungsweise einer gebrochenen Kante, beispielsweise mit einem Winkel von ca. 45° versehen sein. Hierdurch wird die Druckstabilität und der Haftungs- und Dichtigkeitsverbund des Zements im Kontaktbereich zwischen Ring und Bohrlochwand optimiert.

Hydraulischen Kurzschlüssen, die in der Injektionspraxis durch Zementabplatzungen entlang der Zementation/Ventilrohraußenseite oder im Kontaktbereich Zementation/Bohrlochwand entstehen, wird somit konstruktiv wirksam vorgebeugt.

Im Folgenden wird die Erfindung anhand der Figuren näher erläutert. Dabei zeigen:
- Fig. 1: eine schematische Darstellung einer Anlage zur in-situ chemischen Oxidation mit Hilfe eines in den Boden eingeführten Ventilrohrs in einer ersten Ausführungsform;
- Fig. 2: eine schematische Darstellung einer Anlage zur in-situ chemischen Oxidation in einer zweiten Ausführungsform, und
- Fig. 3: eine Detaildarstellung eines Ausschnitts des Ventilrohrs der Fig. 1.

In den Zeichnungen sind einander entsprechende Elemente mit denselben Bezugszeichen bezeichnet. Die Zeichnungen stellen ein schematisches Ausführungsbeispiel dar und geben keine spezifischen Parameter der Erfindung wieder. Weiterhin dienen die Zeichnungen lediglich zur Erläuterung einer vorteilhaften Ausführungsform der Erfindung und sollen nicht in einer solchen Weise interpretiert werden, dass sie den Schutzbereich der Erfindung einengen.

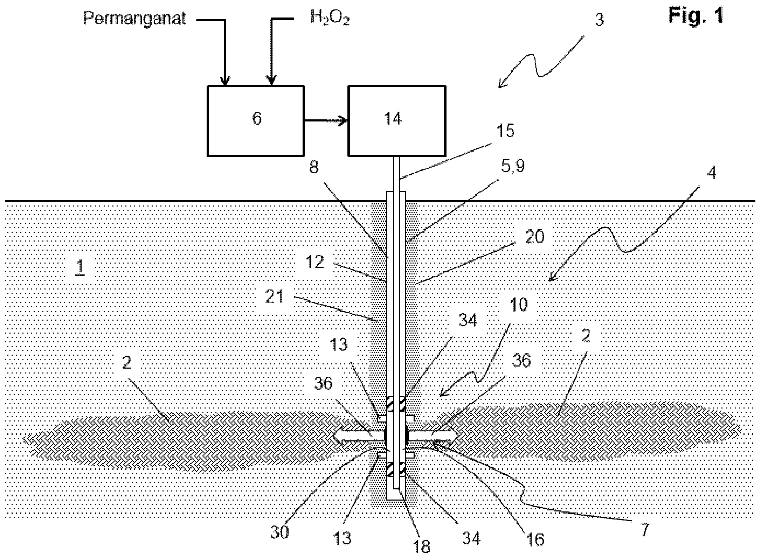

Fig. 1 zeigt eine Anlage 3 zur druckgesteuerten Injektion eines Oxidationsmittels in einen Boden 1, der einen zu behandelnden kontaminierten Bodenbereich 2 umfasst. Die Verunreinigungen des Bodenbereichs 2 bestehen zumindest teilweise aus Schadstoffen, die mit Hilfe einer in-situ chemischen Oxidation behandelt werden können.

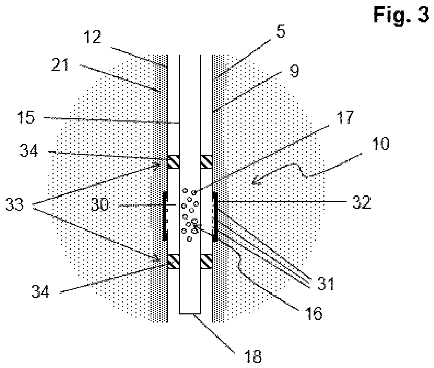

Die druckgesteuerte Injektion des Oxidationsmittels erfolgt unter Verwendung einer Injektionsvorrichtung 4 mit einem in den Boden 1 eingeführten Ventilrohr 5, das mindestens ein durch Druck steuerbares Auslassventil 7 umfasst. Im vorliegenden Ausführungsbeispiel ist das Ventilrohr 5 als Manschettenrohr 9 ausgestaltet. Das Manschettenrohr 9 (siehe Detaildarstellung in Figur 3) ist ein Hohlkörper aus Kunststoff oder Stahl, der in einem (oder mehreren) Auslassbereich(en) 30 mit Öffnungen 31 versehen ist. Im vorliegenden Ausführungsbeispiel umfasst das Manschettenrohr 9 einen einzigen Auslassbereich 30, dessen laterale Ausdehnung und Position auf dem Manschettenrohr 9 der geometrischen Gestalt des zu behandelnden Bodenbereichs 2 angepasst ist. Die Öffnungen 31 sind mit einer Manschette 32, beispielsweise einer Gummimanschette, überdeckt, die sich bei Erreichen eines vorgegebenen Injektionsdrucks aufweitet und das durch das Manschettenrohr 9 eingeleitete Oxidationsmittel durch die Öffnungen 31 in die Umgebung austreten lässt. Die Öffnungen 31 und die Manschette 32 bilden somit gemeinsam ein Manschettenventil 10, das druckgesteuert geöffnet und geschlossen werden kann. Mit Hilfe eines solchen Manschettenventils 10 lässt sich - je nach Ausgestaltung der Manschette 32 - das Oxidationsmittel mit Injektionsdrücken von bis zu 15 bis 30 bar druckgesteuert injizieren. Sollen mehrere Bodenbereiche 2 in unterschiedlicher Tiefe mit Hilfe der in-situ chemischen Oxidation behandelt werden, dann weist das Manschettenrohr 9 zweckmäßigerweise mehrere axial beabstandete Manschettenventile 10 auf, die in einer für den Einsatzfall geeigneten Weise auf dem Manschettenrohr 9 angeordnet sind.

Das Oxidationsmittel wird über eine Injektionsleitung 15 in einen Innenraum 8 des Manschettenrohrs 9 geführt. Die Injektionsleitung 15 ist an ihrem in den Boden 1 eingeführten Ende 18 verschlossen und weist einen Injektionsbereich 16 mit Öffnungen 17 auf, über die das Oxidationsmittel in den Auslassbereich 30 des Manschettenrohrs 9 eingeleitet werden kann. Um sicherzustellen, dass im Auslassbereich 30 des Manschettenrohrs 9 der gewünschte Injektionsdruck aufgebaut wird, ist im Innenraum 8 des Manschettenrohrs 9 ein sogenannter Doppelpacker 33 vorgesehen, der zwei gesteuert expandierbare Dichtungsmanschetten 34 umfasst, die die Injektionsleitung 15 ringförmig umgeben, wobei je eine Dichtungsmanschette 34 unter- bzw. oberhalb des Auslassbereiches 30 angeordnet ist. Diese Dichtungsmanschetten 34 schließen im aktivierten Zustand den Auslassbereich 30 nach unten und nach oben ab und verhindern ein axiales Entweichen des Oxidationsmittels aus dem Auslassbereich 30. Nach erfolgter Injektion des Oxidationsmittels kann die Expansion der Dichtungsmanschetten 34 des Doppelpackers 33 durch Druckentlastung rückgängig gemacht werden. Der Doppelpacker 33 kann dann innerhalb des Ventilrohrs 5 verschoben werden, so dass - im Fall mehrerer Manschettenventile10 - die Injektion kontrolliert und beliebig oft in unterschiedlichen Bereichen wiederholt werden kann.

Die Dichtungsmanschetten 34 können insbesondere hydraulisch expandiert werden. In diesem Fall ist an den Dichtungsmanschetten 34 ein (in Fig. 3 nicht gezeigter) Expansionsschlauch angeschlossen, mittels dessen ein Hydraulikmedium zuführbar ist. Alternativ können auch pneumatisch, elektrisch oder mechanisch aktivierbare Dichtungsmanschetten 34 vorgesehen sein.

Zur Vorbereitung der Bodenbehandlung mit Hilfe der in-situ chemischen Oxidation wird in einem ersten Schritt durch Rammen, Rütteln oder Bohren im Boden 1 ein Loch 20 mit einer Tiefe hergestellt, die mindestens bis in den zu behandelnden Bodenbereich 2 hinunterreicht. In dieses Loch 20, das typischerweise einen Durchmesser von 80 bis 150 mm hat, wird das Manschettenrohr 9 so tief eingeführt, dass sich der Auslassbereich 30 des Manschettenventils 10 in dem zu behandelnden Bodenbereich 2 befindet. Der zwischen einer Innenwand des Lochs 20 und einer Außenwand 12 des Manschettenrohrs 9 gebildete Ringraum wird anschließend mit einer härtbaren Mantelmischung aus z.B. Wasser, Zement und Bentonit verfüllt. Nach dem Erhärten der Mantelmischung bildet diese eine Hülle 21 um das als Manschettenrohr 9, die das Manschettenrohr 9 in seiner Lage fixiert.

Nun kann die Injektion des Oxidationsmittels in den Bodenbereich 2 erfolgen. Dazu werden der Doppelpacker 33 und die Injektionsleitung 15 so tief in das Manschettenrohr 9 eingeführt, dass der Doppelpacker 33 und der Injektionsbereich 16 der Injektionsleitung 15 dem Manschettenventil 10 des Manschettenrohrs 9 gegenüberliegen (siehe Fig. 3). In dieser Position werden nun die Dichtungsmanschetten 34 gespannt, wodurch das Manschettenrohr 9 im Bereich des Doppelpackers 33 nach oben und unten abgedichtet wird. Anschließend wird unter Verwendung einer Hochdruckpumpe 14, insbesondere einer Hochdruck-Kolbenpumpe, das Oxidationsmittel durch die Injektionsleitung 15 eingepresst. Dabei steigt der Druck in dem zwischen den Dichtungsmanschetten 34 gebildeten Ringraum so lange an, bis beim Erreichen des Injektionsdrucks im Auslassbereich 30 des Manschettenrohrs 9 das Mantelmaterial der Hülle 21 aufgebrochen wird und das Oxidationsmittel durch die Perforation 31 des Manschettenrohrs 9 mit hohem Druck in den umgebenden Boden 2 injiziert wird (Pfeile 36). Es findet somit eine druckgesteuerte Injektion des Oxidationsmittels statt. Um sicherzustellen, dass das Oxidationsmittel in horizontaler Richtung in den zu behandelnden Bodenbereich 2 eingepresst wird, wird die Außenwand 12 des Ventilrohrs 5 unter- und oberhalb des Auslassbereichs 30 mit radial abragenden, vorzugsweise ringförmigen Horizontalsperren 13 versehen. Diese Horizontalsperren 13 konzentrieren den Oxidationsmittelstrom in radialer Richtung und gewährleisten eine exakte Platzierung des Oxidationsmittels in den zu behandelnden Bodenbereich 2.

Zur Behandlung lateral ausgedehnter Bodenbereiche 2 ist es zweckmäßig, mehrere lateral zu einander versetzte Ventilrohre 5 in den Boden 1 einzubringen, wobei die Anordnung der Ventilrohre im Grundriss der Verteilung der Schadstoffe im Bodenbereich 2 angepasst wird. Der Abstand der Ventilrohre 5 ist dabei abhängig von der Durchlässigkeit des zu behandelnden Bodens 2 und der Art und Eigenschaften des Oxidationsmittels. Der sich während des Einpressvorganges aufbauende Druck ist ein wichtiger Hinweis für die Ausbreitung des Oxidationsmittels im Boden 2 und wird daher während des Einpressvorgangs kontinuierlich überwacht.

Als Oxidationsmittel können unterschiedliche Fluide verwendet werden, die durch Mischung mehrerer Komponenten hergestellt wird. Unter dem Begriff "Fluid" soll dabei eine fließfähige Substanz, insbesondere ein überkritisches Fluid, eine Flüssigkeit oder ein Flüssigkeitsgemisch, beispielsweise eine Emulsion, eine Lösung oder eine mit Feststoffen versehene Flüssigkeit verstanden werden. Das Oxidationsmittel muss in einer solchen Weise gewählt werden, dass es sich zum Abbau der im Bodenbereich 2 enthaltenen Schadstoffe eignet und den geochemischen Bedingungen angepasst ist.

Im Ausführungsbeispiel der Fig. 1 wird als Oxidationsmittel ein Permanganat, insbesondere Kaliumpermanganat, mit Wasser verwendet. Ganz generell sind einige der als Ausgangsstoffe zur Herstellung der Oxidationsmittel verwendeten Substanzen explosive, brennbare und/oder toxische Substanzen und müssen daher unter spezifischen Sicherheitsvorkehrungen und räumlich getrennt voneinander gelagert werden. Im vorliegenden Ausführungsbeispiel werden die Ausgangsstoffe Permanganat und H₂O unmittelbar vor dem Einbringen in den Bodenbereich 2 mittels separater Dosiervorrichtungen einer zentralen Mischvorrichtung 6 zugeführt, in der das Oxidationsmittel durch Mischung dieser beiden Komponenten aufbereitet wird. Das in der Mischvorrichtung 6 aus den beiden Komponenten erzeugte Gemisch wird anschließend unmittelbar zur Hochdruckpumpe 14 weitergeleitet, die das Gemisch unter Druck in die Injektionsleitung 15 pumpt.

Eine große Herausforderung stellt dabei das gezielte und sichere Einbringen des Oxidationsmittels in den Untergrund dar. Wie bereits erwähnt sind gängige Oxidationsmittel hochreaktive Reagenzien und stellen somit Gefahrstoffe dar. Daher müssen - je nach verwendetem Oxidationsmittel - die für einen sicheren Betrieb notwendigen technischen und konstruktiven Brand- bzw. Explosionsschutzmaßnahmen getroffen werden. Dies erfolgt mit Hilfe einer Anlagentechnik mit prozessintegrierten technischen Sicherheitsmaßnahmen, um die Anlage prozesssicher verwenden zu können und den diversen Sicherheitsvorschriften zu genügen.

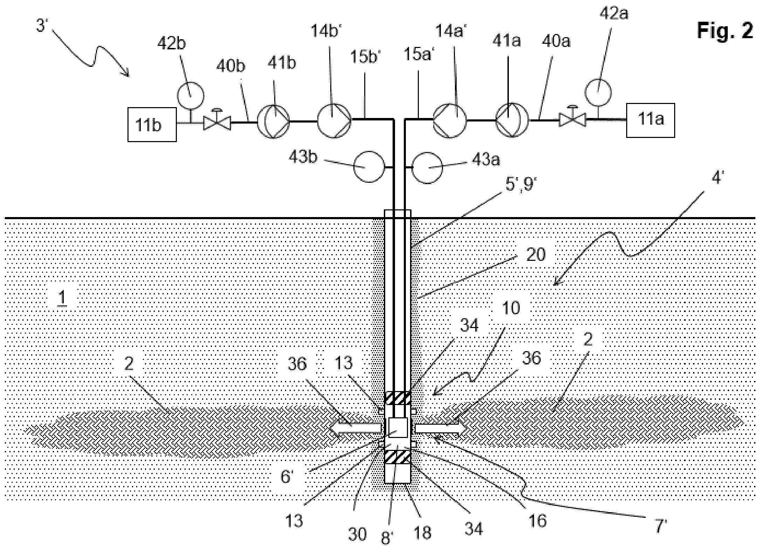

Fig. 2 zeigt eine alternative Ausführungsform einer Anlage 3' zur druckgesteuerten Injektion eines Oxidationsmittels in den kontaminierten Bodenbereich 2, der mit Hilfe einer in-situ chemischen Oxidation behandelt werden soll, und eignet sich insbesondere für Einsatzfälle, in denen ein kurzlebiges Oxidationsmittel, insbesondere Fentons Reagenz, zum Einsatz kommen soll.

Das Oxidationsmittel Fentons Reagenz entsteht durch Aktivierung von H₂O₂ mit Fe²⁺. Dabei entstehen Hydroxyl-Radikale mit einem sehr hohen Redoxpotenzial. Als Ausgangsprodukt werden in der Regel konzentrierte H₂O₂-Lösungen verwendet, die durch FeSO₄-Lösungen aktiviert werden. Das Hydroxyl-Radikal ist sehr instabil und zersetzt sich rasch im Untergrund. Bei Verwendung der herkömmlichen Injektionsverfahren kann es daher nur über kurze Distanzen transportiert werden und hat nur einen geringen Wirkungsradius von wenigen Metern.

Mit Hilfe der erfindungsgemäßen druckgesteuerten Injektion kann Fentons Reagenz stoßartig mit höherem Druck in den Boden eingepresst werden, wodurch der Wirkungsbereich erheblich erhöht werden kann. Weiterhin erfolgt in der Anlage 3' der Fig. 2 - im Unterschied zum Ausführungsbeispiel der Fig. 1 - die Mischung der Einzelkomponenten in einer Mischvorrichtung 6', die im Inneren des Ventilrohrs 5 angeordnet ist, so dass die Mischung erst kurz vor dem Ausstoß des Oxidationsmittels in den Boden 2 erfolgt. Auf diese Weise lässt sich die Reaktionszeit optimal ausnützen, weil das Oxidationsmittel unmittelbar nach dem Mischen in den Boden 2 injiziert wird.

Wie aus Fig. 2 ersichtlich, werden die Ausgangsstoffe für Fentons Reagenz in räumlich getrennten Tanks 11a und 11b gelagert. Die FeSO₄-Lösung wird aus dem Tank 11a über eine Leitung 40a und eine Dosierpumpe 41a in eine erste Injektionsleitung 15a' eingespeist, während die H₂O₂- Lösung aus dem Tank 11b über eine Leitung 40b und eine Dosierpumpe 41b in eine zweite Injektionsleitung 15b' eingespeist wird. In den Leitungen 40a, 40b sind Durchflussmesser 42a, 42b vorgesehen, mit denen die zugeführten Mengen kontrolliert werden können. In jeder der Injektionsleitungen 15a', 15b' ist eine Hochdruckpumpe 14a', 14b' angeordnet, so dass die beiden Komponenten getrennt komprimiert und getrennt durch den Innenraum 8' des Manschettenrohrs 9 zu einer Mischvorrichtung 6' geleitet werden, wo sie zur Erzeugung von Fentons Reagenz gemischt und - analog zu dem in Fig. 1 beschriebenen Ausführungsbeispiel - durch das Manschettenventil 10 in den Boden 2 injiziert werden. Mit Hilfe von Sensoren 43a, 43b werden dabei Druck und Durchfluss gemessen. Das Mischen der Komponenten FeSO₄ und H₂O₂ zur Erzeugung des Oxidationsmittels Fentons Reagenz erfolgt in diesem Ausführungsbeispiel somit unmittelbar vor dem Einpressen in den Boden 1 über das Manschettenventil 10, so dass nur ein minimaler Zerfall des Oxidationsmittels stattfindet, bevor das Oxidationsmittel auf den Bodenbereich 2 einwirkt. Gegebenenfalls können Zuführleitungen für weitere Reaktionsstoffe (wie beispielsweise H₂SO₄) oder Reinigungsmedien vorgesehen sein. Das geschlossene Injektionssystem ist dabei für einen Arbeitsdruck bis maximal 100 bar ausgelegt.

Zusätzlich zu den in den Figuren gezeigten Merkmalen umfasst die Gesamtanlage 3, 3' der Figuren 1 und 2 eine (in den Figuren nicht dargestellte) Steuereinheit zur In-Prozess-Steuerung, die basierend auf den Messwerten einer Vielzahl von im System vorgesehenen Sensoren (für Druck, Durchflussmenge etc.) die Dosierung der Einzelkomponenten, den Mischvorgang, die Beschickung der Pumpen 14, 14a', 14b' und den Einpressvorgang vollautomatisch steuert. So ist insbesondere die Injektionsleitung 15, 15a', 15b' - wie in Fig. 2 angedeutet - vorteilhafterweise mit Sensoren für Druck, Durchfluss, Temperatur und pH-/Redoxpotenzial-Werte versehen. Während des Injektionsvorgangs erfolgt eine zeitliche und räumlich Injektionsverlaufskontrolle, bei der der Durchfluss des Oxidationsmittels bzw. der zugeführten Komponenten, die elektrische Leitfähigkeit bzw. pH/Redoxpotenzial gemessen wird. Weiterhin ist die Injektionsleitung mit Osmosewasser spülbar, und das Injektionssystem verfügt über eine Entlüftung.

Es versteht sich von selbst, dass die in den Figuren 1 bis 3 gezeigten Anlagen 3 und 3' zur druckgesteuerten Injektion eines Oxidationsmittels in einen Boden 1, der einen zu behandelnden kontaminierten Bodenbereich 2 umfasst, ebenfalls zur druckgesteuerten Injektion eines Nährmediums für Mikroorganismen, wie oben angegeben, verwendet werden können.

## Patentansprüche

1. Verfahren zur in-situ Sanierung eines Bodens (1) und/oder Wassers/Grundwassers mit einem kontaminierten Bodenbereich (2), welcher abbaubare Schadstoffe enthält, bei welchem eine fluide Substanz mit Hilfe einer Injektionsvorrichtung (4 , 4'), welche ein Ventilrohr (5, 5') mit einem druckgesteuerten Auslassventil (7) umfasst, unter Verwendung eines Druckinjektionsverfahrens in den Boden (1) eingebracht wird, **dadurch gekennzeichnet, dass** die fluide Substanz zwischen radial abragenden Horizontalsperren (13) mit welchen eine Außenwand (12) des Ventilrohrs (5, 5') unter- und oberhalb eines Auslassbereichs (30) des Auslassventils (7) versehen ist in den Boden (1) eingebracht wird.

2. Verfahren nach Anspruch 1, **dadurch gekennzeichnet, dass** in der Injektionsvorrichtung (4 , 4') eine mehrmalige Verpressung erfolgt.

3. Verfahren nach Anspruch 1 oder 2, **dadurch gekennzeichnet, dass** die fluide Substanz ein Oxidationsmittel ist.

4. Verfahren nach Anspruch 3, **dadurch gekennzeichnet, dass** das Oxidationsmittel durch Mischen von mindestens zwei Komponenten hergestellt wird.

5. Verfahren nach Anspruch 4, **dadurch gekennzeichnet, dass** das Mischen der mindestens zwei Komponenten unmittelbar vor Einleitung des Oxidationsmittels in die Injektionsvorrichtung (4) erfolgt.

6. Verfahren nach Anspruch 4, **dadurch gekennzeichnet, dass** das Mischen der mindestens zwei Komponenten in einem Innenraum (8') der Injektionsvorrichtung (4') erfolgt.

7. Verfahren nach einem der Ansprüche 4 bis 6, **dadurch gekennzeichnet, dass** als Oxidationsmittel ein Permanganat, insbesondere Kaliumpermanganat, enthaltendes Gemisch verwendet wird.

8. Verfahren nach einem der Ansprüche 4 bis 6, **dadurch gekennzeichnet, dass** als Oxidationsmittel Fentons Reagenz verwendet wird.

9. Verfahren nach Anspruch 1 oder 2, **dadurch gekennzeichnet, dass** die fluide Substanz ein Nährmedium für Mikroorganismen ist.

10. Anlage (3 , 3') zur in-situ Sanierung eines Bodens(1) und/oder Wassers/Grundwassers mit einem kontaminierten Bodenbereich (2), welcher abbaubare Schadstoffe enthält, wobei die Anlage (3 , 3') mindestens eine Injektionsvorrichtung (4 , 4') mit einem Ventilrohr (5 , 5') umfasst, mittels dessen eine fluide Substanz in den Boden (1) eingebracht wird, wobei das Ventilrohr (5 , 5') ein druckgesteuertes Auslassventil (7) zur Injektion der fluiden Substanz in den Boden (1) umfasst, **dadurch gekennzeichnet, dass** eine Außenwand (12) des Ventilrohrs (5 , 5') mit radial abragenden Horizontalsperren ( 13) zur horizontalen Einleitung der fluiden Substanz in den Boden (1) versehen ist.

11. Anlage nach Anspruch 10, **dadurch gekennzeichnet, dass** das Ventilrohr (5 , 5') durch ein Manschettenrohr (9) mit mindestens einem Manschettenventil ( 10) gebildet ist.

12. Anlage nach einem der Ansprüche 10 oder 11 **dadurch gekennzeichnet, dass** die Anlage (3 , 3') eine Mischvorrichtung (6 , 6') zur Herstellung der fluiden Substanz durch Mischen von mindestens zwei Komponenten umfasst.

13. Anlage nach Anspruch 12, **dadurch gekennzeichnet, dass** die Mischvorrichtung (6) in unmittelbarer Nachbarschaft der Injektionsvorrichtung (4) angeordnet ist.

14. Anlage nach Anspruch 12, **dadurch gekennzeichnet, dass** die Mischvorrichtung (6') in einem Innenraum (8') des Ventilrohrs (5') angeordnet ist.

15. Anlage nach Anspruch 13, **dadurch gekennzeichnet, dass** die Mischvorrichtung (6') in unmittelbarer Nachbarschaft des Auslassventils (7) des Ventilrohrs (5') angeordnet ist.

## Claims

1. Method for in situ remediation of a body of soil (1) and/or water/groundwater with a contaminated soil region (2) which contains degradable pollutants, wherein a fluid substance is delivered into the soil (1) by means of an injection apparatus (4, 4') which comprises a valve tube (5, 5') with a pressure-controlled outlet valve (7), using a pressure injection process, **characterized in that** the fluid substance is delivered into the soil (1) between radially protruding horizontal barriers (13) carried by an outer wall (12) of the valve tube (5, 5') below and above an outlet region (30) of the outlet valve (7).

2. Method according to Claim 1, **characterized in that** repeated grouting takes place in the injection apparatus (4, 4').

3. Method according to Claim 1 or 2, **characterized in that** the fluid substance is an oxidant.

4. Method according to Claim 3, **characterized in that** the oxidant is prepared by mixing at least two components.

5. Method according to Claim 4, **characterized in that** the at least two components are mixed immediately before introduction of the oxidant into the injection apparatus (4).

6. Method according to Claim 4, **characterized in that** the at least two components are mixed in an interior compartment (8') of the injection apparatus (4').

7. Method according to any of Claims 4 to 6, **characterized in that** the oxidant used comprises a mixture comprising permanganate, more particularly potassium permanganate.

8. Method according to any of Claims 4 to 6, **characterized in that** the oxidant used comprises Fenton's reagent.

9. Method according to Claim 1 or 2, **characterized in that** the fluid substance is a nutrient medium for microorganisms.

10. Equipment (3, 3') for in situ remediation of a body of soil (1) and/or water/groundwater with a contaminated soil region (2) which contains degradable pollutants, wherein the equipment (3, 3') comprises at least one injection apparatus (4, 4') with a valve tube (5, 5') by means of which a fluid substance is delivered into the soil (1), wherein the valve tube (5, 5') comprises a pressure-controlled outlet valve (7) for injecting the fluid substance into the soil (1), **characterized in that** an outer wall (12) of the valve tube (5, 5') carries radially protruding horizontal barriers (13) for horizontally introducing the fluid substance into the soil (1).

11. Equipment according to Claim 10, **characterized in that** the valve tube (5, 5') is formed by a sleeve tube (9) with at least one sleeve valve (10).

12. Equipment according to either of Claims 10 and 11, **characterized in that** the equipment (3, 3') comprises a mixing apparatus (6, 6') for preparing the fluid substance by mixing at least two components.

13. Equipment according to Claim 12, **characterized in that** the mixing apparatus (6) is sited in the immediate vicinity of the injection apparatus (4).

14. Equipment according to Claim 12, **characterized in that** the mixing apparatus (6') is sited in an interior compartment (8') of the valve tube (5').

15. Equipment according to Claim 13, **characterized in that** the mixing apparatus (6') is sited in the immediate vicinity of the outlet valve (7) of the valve tube (5').

## Revendications

1. Procédé pour l'assainissement in situ d'un sol (1) et/ou d'une eau/nappe phréatique présentant une zone de sol contaminée (2), qui contient des matières polluantes dégradables, selon lequel une substance fluide est introduite dans le sol (1) à l'aide d'un dispositif d'injection (4, 4'), qui comprend un tube de soupape (5, 5') muni d'une soupape de sortie commandée par pression (7), en utilisant un procédé d'injection sous pression, **caractérisé en ce que** la substance fluide est introduite dans le sol (1) entre des barrières horizontales dépassant radialement (13) desquelles une paroi extérieure (12) du tube de soupape (5, 5') est munie en dessous et au-dessus d'une zone de sortie (30) de la soupape de sortie (7).

2. Procédé selon la revendication 1, **caractérisé en ce qu'**une compression à plusieurs reprises a lieu dans le dispositif d'injection (4, 4').

3. Procédé selon la revendication 1 ou 2, **caractérisé en ce que** la substance fluide est un oxydant.

4. Procédé selon la revendication 3, **caractérisé en ce que** l'oxydant est fabriqué par mélange d'au moins deux composants.

5. Procédé selon la revendication 4, **caractérisé en ce que** le mélange desdits au moins deux composants a lieu directement avant l'introduction de l'oxydant dans le dispositif d'injection (4).

6. Procédé selon la revendication 4, **caractérisé en ce que** le mélange desdits au moins deux composants a lieu dans une chambre intérieure (8') du dispositif d'injection (4').

7. Procédé selon l'une quelconque des revendications 4 à 6, **caractérisé en ce qu'**un mélange contenant du permanganate, notamment du permanganate de potassium, est utilisé en tant qu'oxydant.

8. Procédé selon l'une quelconque des revendications 4 à 6, **caractérisé en ce que** du réactif de Fenton est utilisé en tant qu'oxydant.

9. Procédé selon la revendication 1 ou 2, **caractérisé en ce que** la substance fluide est un milieu nutritif pour des microorganismes.

10. Unité (3, 3') pour l'assainissement in situ d'un sol (1) et/ou d'une eau/nappe phréatique présentant une zone de sol contaminée (2), qui contient des matières polluantes dégradables, l'unité (3, 3') comprenant au moins un dispositif d'injection (4, 4') muni d'un tube de soupape (5, 5'), au moyen duquel une substance fluide est introduite dans le sol (1), le tube de soupape (5, 5') comprenant une soupape de sortie commandée par pression (7) pour l'injection de la substance fluide dans le sol (1), **caractérisée en ce qu'**une paroi extérieure (12) du tube de soupape (5, 5') est munie de barrières horizontales dépassant radialement (13) pour l'introduction horizontale de la substance fluide dans le sol (1).

11. Unité selon la revendication 10, **caractérisée en ce que** le tube de soupape (5, 5') est formé par un tube à manchon (9) muni d'au moins une soupape de manchon (10) .

12. Unité selon l'une quelconque des revendications 10 ou 11, **caractérisée en ce que** l'unité (3, 3') comprend un dispositif de mélange (6, 6') pour la fabrication de la substance fluide par mélange d'au moins deux composants.

13. Unité selon la revendication 12, **caractérisée en ce que** le dispositif de mélange (6) est agencé au voisinage immédiat du dispositif d'injection (4).

14. Unité selon la revendication 12, **caractérisée en ce que** le dispositif de mélange (6') est agencé dans une chambre intérieure (8') du tube de soupape (5').

15. Unité selon la revendication 13, **caractérisée en ce que** le dispositif de mélange (6') est agencé au voisinage immédiat de la soupape de sortie (7) du tube de soupape (5').
